Europäisches Patentamt

European Patent Office

Office européen des brevets

(19)

(11) Numéro de publication: **0 190 060**

**B1**

(12) **FASCICULE DE BREVET EUROPÉEN**

(45) Date de publication du fascicule du brevet:
14.12.88

(51) Int. Cl.⁴: **H 04 L 11/16,** H 04 L 11/18

(21) Numéro de dépôt: **86400025.2**

(22) Date de dépôt: **08.01.86**

(54) **Procédé de diffusion sûre de messages dans un réseau en anneau et dispositif permettant la mise en oeuvre du procédé.**

(30) Priorité: **08.01.85 FR 8500202**

(43) Date de publication de la demande:
**06.08.86 Bulletin 86/32**

(45) Mention de la délivrance du brevet:
**14.12.88 Bulletin 88/50**

(84) Etats contractants désignés:
**BE DE GB IT LU NL**

(56) Documents cité:
**EP-A-0 093 004**

**AFIPS CONFERENCE PROCEEDINGS - 1981 NATIONAL COMPUTER CONFERENCE, 4-7 mai 1981, Chicago, Illinois, pages 209-214, AFIPS Press, Arlington, Virginia, US; W.Y. CHENG et al.: "ILLINET - A 32 Mbits/sec. local-area network" CONTROL ENGINEERING, vol. 28, no. 2, février 1981, pages 80-82, St. Pontiac, Illinois, US; E. JANECEK: "Packet-switching network tightens control system response"**

(73) Titulaire: **BULL S.A., 121, avenue de Malakoff, F-75764 Paris Cédex 16 (FR)**

(72) Inventeur: **Guerin, Christian, 11, allée des Passières, F-38190 Villard Bonnot (FR)**
Inventeur: **Raison, Henri, 23, boulevard Maréchal Leclerc, F-38000 Grenoble (FR)**
Inventeur: **Martin, Pascal, Villa des Jonquilles La Tuilerie, F-38410 Uriage (FR)**

(74) Mandataire: **Debay, Yves, BULL S.A. Industrial Property Department 25 avenue de la Grande-Armée, F-75016 Paris (FR)**

## Description

La présente invention concerne un procédé de diffusion sûre de messages dans un réseau en anneau entre une station émettrice et plusieurs stations du réseau auxquelles ce message est susceptible d'être adressé et copié et le dispositif permettant la mise en oeuvre du procédé.

Il est connu des procédés d'échange de messages dans un réseau en anneau entre une station émettrice et plusieurs stations du réseau auxquelles un message contenu totalement ou en partie dans une trame est susceptible d'être adressé et comportant une étape d'émission par la station émettrice d'un champ vide (CV) ne contenant au départ aucune information et une étape de modification de l'information contenue dans ce champ vide au passage dans chaque station. Les informations émises dans le champ vide permettent d'avoir la certitude que toutes les stations adressées ont copié le message ou qu'au moins une station adressée n'a pas pu copier le message pour une raison ou pour une autre. Pour plus de détails sur ce type de procédé on pourra se référer à la demande de brevet EP-A-190 951 déposé ce jour au nom de BULL SEMS et intitulé: "Procédé d'échange de messages dans un réseau en anneau et dispositif permettant la mise en oeuvre du procédé". Ce type de procédé présente l'inconvénient que l'on ne peut déterminer si la station a pu prendre ou pourra prendre en compte la totalité du message ou bien si seulement elle n'a copié ou ne pourra copier, qu'une partie du message et ceci par faute de disponibilité mémoire dans la station. Il est en effet connu dans les systèmes de communication qu'un message trop long peut être "decoupé" en paquets plus petits avant émission sur le câble, chacun de ces paquets étant contenu dans une trame, puis en réception, ces paquets sont réassemblés pour reformer le message. Il est indispensable, pour pouvoir exploiter un message en réception, d'avoir reçu tous les paquets constitutifs de ce message. Il faut donc s'assurer, lors de la réception mémoire dans la station pour accueillir le message complet. La présente invention a pour but de pallier l'inconvénient ci-dessus et de proposer un procédé de diffusion sûre de messages permettant d'avoir la certitude que toutes les stations adressées ont copié ou pourront copier l'intégralité du message ou qu'au moins une station n'a pas pu ou ne pourra pas assurer sa tâche.

Il est connu de AFIPS CONFERENCE PORCEEDINGS - 1981 NATIONAL COMPUTER CONFERENCE, 4 - 7 mai 1981, Chicago, Illinois, pages 209 - 214, un procédé de diffusion sûre de messages dans un réseau en anneau entre une station émettrice et plusieurs stations du réseau auxquelles un message contenu dans le champ d'information (INFO) d'une trame est susceptible d'être adressé par un champ d'adresse destinataire (DA) et copié, comportant une étape d'émission par la station émettrice (EM) après un champ (FT) indiquant la fin de la trame d'un champ vide (CV) contenant au départ aucune information. Ce but est atteint par le fait que le procédé comporte en outre une étape de modification de l'information contenue dans un bit (D) de ce champ vide (CV) au passage dans chaque station, pour indiquer que les stations qui se sont reconnues comme adressées par le champ d'adresse destinataire (DA) et de copié l'information avaient bien la place suffisante de mémoire associée à l'adresse destinataire (DA) pour copier le message dans son intégralité, par comparaison entre une valeur (L) indiquant la longueur du message transmis, valeur (L) fournie par les premiers bits du champ (INFO) et une valeur (C de F) rangée dans une mémoire de la station, indicatrice du crédit mémoire de la station disponible pour cette adresse destinataire (DA).

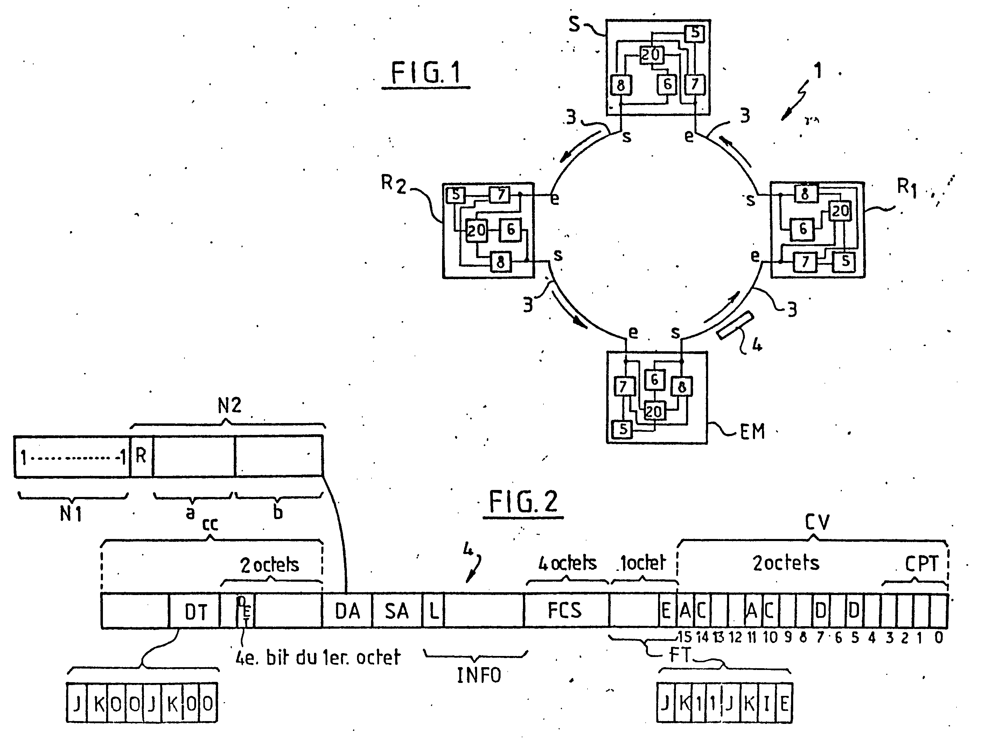

Pour ce faire, la station émettrice (EM) indique dans le premier octet du champ INFO de la trame émise (champ L Figure 2), la longueur du message complet (en nombre d'octets par exemple). Si le message est découpé en plusieurs paquets, c'est dans la trame contenant le premier paquet émis que sera indiquée la longueur totale de ce message, les paquets suivants (du même message) étant assortis d'une longeur nulle. Ainsi, le premier paquet d'un message ne sera pris en compte dans une station que si le message correspondant peut être stocké intégralement dans la mémoire de cette station. Si le premier paquet entre correctement, les paquets suivants (du message) entrent sans problème puisqu'ils ont une longueur artificiellement nulle, et qu'en fait la place en mémoire leur a été réservée par le premier paquet du message. Donc, toute station, à la réception de chaque trame, compare l'octet L du champ INFO au crédit de mémoire momentanément disponible pour l'adresse logique contenue dans le champ DA de la trame. Ce crédit mémoire s'appelle (C de F). Il est lu dans la table T2 de la mémoire 213.

Un autre but de l'invention est de proposer un dispositif de mise en oeuvre du procédé.

Ce but est atteint par le fait que le dispositif de mise en oeuvre du procédé comporte des moyens d'émission d'un champ vide (CV) des moyens de réception et de stockage de l'information contenue dans un champ vide et des moyens de détection du passage du champ vide; des moyens de reconnaissance de l'adressage ou du non adressage de la station et de prise en compte de l'information (INFO); des moyens d'extraction, du champ (INFO), de la longueur du message à prendre en compte; des moyens (8) de modification de l'information véhiculée par le champ vide en fonction du résultat fourni par les moyens de reconnaissance d'adressage et les moyens de comparaison de la longueur du message à prendre en compte et de la place disponible dans la mémoire des moyens de prise en compte de l'information.

D'autres caractéristiques et avantages de l'invention apparaîtront plus clairement à la lecture de la description ci-après faite en référence aux figures annexées dans lesquelles:

- la figure 1 représente un réseau de communication en anneau entre plusieurs stations, dont une transmet une trame aux autres suivant un procédé d'adressage particulier;

- la figure 2 est une représentation d'une trame comprenant le message ou une partie de ce message (paquet) transitant entre les différentes stations du réseau;

- la figure 3 est un schéma de principe des circuits permettant la mise en oeuvre du procédé d'adressage entre stations;

- la figure 4 représente schématiquement les tables de mémoire utilisées dans le procédé d'adressage;

- la figure 5 représente les circuits constituant les moyens de réception et de détection du passage d'un champ vide et les moyens de stockage de l'information du champ vide permettant l'échange du message;

- la figure 6 représente les circuits constituant les moyens de modification de l'information véhiculée par le champ vide;

- la figure 7 représente les circuits constituant les moyens de lecture et de vérification de l'information contenue dans le champ vide dans la station émettrice.

- la figure 8 représente les circuits constituant les moyens d'émission du champ vide.

La figure 1 représente un réseau (1) constitué par une station émettrice (EM) dont la sortie (s) est reliée par un câble (3) à l'entrée (e) d'une première station réceptrice, (R1), dont la sortie (s) est reliée par un câble (3) à l'entrée (e) d'une station non réceptrice (S) (shunt), cette station shunt (S) étant reliée par un câble (3) à l'entrée (e) d'une deuxième station réceptrice (R2) dont la sortie (s) est reliée par un câble (3) à l'entrée (e) de la station émettrice (EM). La station (EM) est considérée comme la station émettrice mais il est bien évident que chacune des stations réceptrices du réseau peut également jouer le rôle de station émettrice et que dans ce cas là, la station (EM) devient elle réceptrice. La station (EM) émet sur le câble (3) une trame (4) codée par exemple en Manchester, ou en tout autre code utilisé dans les transmissions. Cette trame véhicule sous forme codée l'information représentée à la figure (2) et constituée par un champ de contrôle (CC) incluant un début de trame (DT) suivi de deux octets dans lesquels le quatrième bit du premier octet (DET) permet d'indiquer si l'on transmet une trame ou bien si l'on envoie un jeton. Ce champ de contrôle (CC) est suivi d'un champ (DA) adresse destinataire, lui-même suivi d'un champ d'adresse source (SA) définissant l'organe émetteur. Le champ adresse source (SA) est suivi d'un champ contenant les informations transmis es par la trame (paquet ou message). Ce champ (INFO) est lui-même suivi de quatre octets définissant un champ (FCS), qui par l'exploitation de ces quatre octets permet d'assurer un contrôle de cohérence de l'information transmise. Le champ (FCS), est lui-même suivi d'un octet constituant le champ (FT) fin de trame, lequel comporte un dernier bit (E) (erreur). Le champ (FT) est lui-même suivi de deux octets constituant un champ vide (CV) dans lequel par exemple, les quatre bits (0), (1), (2), (3), constituent un champ (CPT). Les bits (5) et (7) du champ (CV) représentent l'information (D), les bits (11) et (15) représentent l'information (A) et les bits (10) et (14) l'information (C). Le bit (A) a pour fonction d'indiquer qu'au moins une station a reconnu l'adresse (DA). Le bit (C) a pour fonction d'indiquer soit que toutes les stations qui devaient se reconnaître comme adressées ont bien recopié l'information, soit qu'au moins une des stations qui devait se reconnaître et recopier n'a pas pu exécuter la copie pour une raison ou pour une autre. Le bit (D) (diffusion) indique soit que toutes les stations qui devaient se reconnaître comme adressées ont une disponibilité mémoire (associée à l'adresse DA) suffisante pour la taille du message à recevoir, soit qu'une au moins des stations qui devait se reconnaître a une disponibilité mémoire insuffisante (en relation avec l'adresse DA) pour recevoir la totalité du message. Le champ (CPT) constitue un compteur du nombre des stations visitées par le message et permet de s'assurer que toutes les stations du réseau ont bien vu passer le message. Le fait que les bits (A), (C) et (D) soient doublés permet assurer une redondance dans les signaux véhiculés ainsi que dans le traitement des informations représentées par ces bits et par conséquent d'améliorer la sécurité de fonctionnement du procédé. Toutefois, il est bien évident que l'on pourrait concevoir un procédé ne comportant qu'un seul bit (A), un seul bit (C) et un seul bit (D). Par ailleurs pour d'autres raisons on a choisi le champ (CV) égal à deux octets, mais il est bien évident que ceci est purement indicatif et que suivant les besoins on pourra modifier la taille du champ (CV) et la taille du champ (CPT) sans pourtant sortir du cadre de l'invention. Le procédé d'échange de messages entre les différentes stations est particulièrement avantageux dans le cas où avec un seul message on peut adresser plusieurs stations. Pour ce faire le champ (DA) adresse destinataire doit comporter des informations et être associé avec des stations qui fonctionnent suivant un procédé d'adressage particulier permettant à un seul message d'être reçu par plusieurs stations à la fois et ceci de façon sélective. Un tel procédé d'adressage est également décrit dans EP-A-191 990 (date de publication; 27. 8. 86) du même requérant.

Pendant le passage de la trame dans la couche physique des stations chaque station détecte le champ de contrôle (CC) et son en-tête (DT), prélève les bits constitués par le champ adresse destinataire, va regarder dans une table (21) si cette adresse est contenue dans cette table de la mémoire (213), en même temps mémorise momentanément le message constitué par l'information et dans le cas où l'adresse transportée par le message figure également dans la table, dans le cas où la trame est correcte, et dans le cas également où la mémoire est suffisante pour accueillir le message complet, chaque station valide l'entrée de l'information et modifie les bits du champ vide de la trame de façon à indiquer que la prise en compte de l'information a été effectuée.

Comme on peut le comprendre le procédé d'adressage présente l'avantage de s'affranchir de l'établissement d'une correspondance entre les adresses destinataires et les stations physiquement présentes dans le réseau. D'autre part, pour l'opérateur qui se trouve devant une station quelconque il n'est plus nécessaire de connaître la constitution du réseau et chaque station apparaît comme étant une machine présentant la capacité et les facultés offertes par l'assemblage des différentes stations du réseau. Ce procédé est donc particulièrement intéressant dans les machines à architecture répartie dans lesquelles le réseau de communication doit rester transparent pour l'opérateur. Dans chaque table de chaque station, les adresses correspondent à des objets disponibles ou pouvant être effectués par la station. Ces objets peuvent être à titre d'exemple, soit une ressource physique telle qu'une imprimante, soit une ressource logicielle telle qu'une tâche ou un fichier, soit un mécanisme tel qu'une gestion de verrou. Ces objets évoluent (création, destruction) et par conséquent la table décrivant les objets disponibles évolue aussi dans le temps. Les tables reflètent les ressources en présence. Au départ il y a initialisation du système puis on crée ou on élimine un ou plusieurs objets. Ainsi on crée un nouvel objet dans la table, par exemple, par le fait de brancher un nouveau périphérique, de charger un nouveau programme, ou de recréer la fonction compilation de la station qui vient de tomber en panne dans une autre station. De même on peut éliminer un ou plusieurs objets dans le cas où l'utilisateur n'a plus besoin d'une ou plusieurs fonctions ou ressources. Par conséquent la configuration de la table représentation de celles-ci évoluera dans le temps en fonction du travail effectué par chacunes des stations.

Le procédé comprend les étapes suivantes:
- la station émettrice (EM) envoie une trame constituée de façon classique par le champ (CC), le champ (DA), le champ (SA), le champ (INFO), le champ (FCS), le champ (FT) et ajoute à la suite de ce champ (FT) un champ (CV) contenant les informations que l'on a définies ci-dessus, ces informations étant initialement nulles. Lors de son arrivée dans la première station (R1) le champ (DA) va permettre à la station (R1) de déterminer qu'elle doit prendre en compte l'information contenue (INFO) et cette station (R1) va par la suite modifier au passage le contenu du champ (CV) de façon à indiquer qu'elle a bien reconnu l'adresse, qu'elle a la capacité mémoire suffisante pour accueillirle message complet, qu'elle a bien recopié la trame et que cette trame est passée dans une première station. La trame continue son chemin vers la station (S) et cette dernière dès la détection de l'arrivée du message constate par le champ (DA) qu'elle ne doit pas prendre en compte l'information et laisse passer le message en modifiant simplement le contenu du champ (CPT) le façon à indiquer que le message est passé dans une deuxième station. Le message poursuit son chemin et arrive à la station (R2) qui détermine par le champ (DA) qu'elle doit prendre en compte l'information contenue dans ce message et elle modifie en conséquence le champ (CV). Enfin le message revient à la station émettrice (EM) qui vérifie que le nombre de stations visitées correspond bien au nombre inscrit dans une mémoire (50), indiquant le nombre de stations du réseau, qu'au moins une station du réseau s'est reconnue adressée et que toutes les stations du réseau qui se sont reconnues comme adressées ont la capacité mémoire suffisante pour accueillir tout le message et ont bien copié l'information. Dans ce cas, la station émettrice constatant le bon fonctionnement de l'échange émet une autre trame ou passe un jeton à une autre station. Ce qui à pour effet de valider la trame précédente chez les récepteurs correspondants. Par contre dans le cas où la station émettrice constate qu'il y a eu une erreur soit de copie soit de transmission soit de capacité mémoire, ou que le nombre de stations ne correspond pas au nombre indiqué dans sa mémoire, la station (EM) émet une trame particulière d'annulation de la trame précédente; ainsi, une trame dans ce mode de fonctionnement est ou bien reçue correctement par tous les destinataires, ou bien reçue par aucun; une trame mal transmise, et donc annulée, est bien sûr ré-émise par la suite. A l'arrivée dans la station (EM) les bits (A) et (C) peuvent présenter les configurations suivantes:
- soit (A) est égal à 0 et (C) est égal à 0 ce qui indique qu'aucune station ne s'est reconnue comme adressée et que par conséquent aucune station n'a copié le message;
- soit (A) est égal à 1 et (C) est égal à 1 ce qui indique qu'une ou plusieurs stations se sont reconnues comme adressées et ont recopié correctement le message;
- soit (A) est égal à 1 et (C) est égal à 0 ce qui indique qu'au moins une station qui était adressée n'a pas recopié correctement. Pour ce faire il faut que chacune des stations adressées comporte un circuit de modification du champ (CV) qui satisfasse les trois tables de vérité suivantes:

Premier cas: en entrée de la station, (A) est égal à 0 et (C) est égal à 0 ce qui voulait dire qu'aucune station précédemment ne s'était reconnue comme adressée et n'avait recopié. Par conséquent la sortie de la station doit présenter les valeurs ci-après indiquées par (A) en sortie, (C) en sortie, dans la colonne (R̄) dans le cas où la station ne devait pas se reconnaître, dans la colonne (R.C) dans le cas où la station devait se reconnaître et copier l'information et dans la colonne (RC̄) dans le cas où la station devait se reconnaître mais n'a pas copié l'information.

| R̄ | R.C | RC̄ | |
|---|---|---|---|
| 0 | 1 | 1 | A en sortie |
| 0 | 1 | 0 | C en sortie |

Le deuxième cas correspond au cas où la station reçoit en entrée le bit (A) à 1 et le bit (C) à 1 ce qui veut dire qu'au moins une station en amont s'est reconnue comme adressée et qu'elle a copié correctement et qu'aucune station en amont n'a été dans l'impossibilité de recopier cette trame. Cette deuxième table présente en sortie les modifications que doit apporter la station au champ (CV) suivant les cas de figure. Ainsi dans cette table la colonne R̄ correspond au cas de figure de la station (S) du réseau.

| R̄ | R.C | RC̄ | |
|---|---|---|---|
| 1 | 1 | 1 | A en sortie |
| 1 | 1 | 0 | C en sortie |

Le troisième cas correspond à l'éventualité où en entrée on reçoit l'information (A) égale à 1 et (C) égale à 0 ce qui veut dire qu'une station au moins en amont s'est reconnue comme adressée et n'a pas recopié le message pour une raison ou pour une autre.

| R̄ | R.C | RC̄ | |
|---|---|---|---|
| 1 | 1 | 1 | A en sortie |
| 0 | 0 | 0 | C en sortie |

Les valeurs de (A) et (D) évoluent de la façon représentée dans les trois cas correspondant aux trois tableaux ci-dessus a condition de remplacer dans les tableaux et les cas ci-dessus (C) par (D)
- soit (A) est égal à 0 et (0) est égal à 0 ce qui indique qu'aucune station ne s'est reconnue comme adressée et que par conséquent aucune station n'avait la possibilité de prendre en compte le message;
- soit (A) est égal à 1 et (D) est égal à 1 ce qui indique qu'une ou plusieurs stations se sont reconnues comme adressées et avaient toutes la capacité mémoire suffisante pour accueillir intégralement le message;
- soit (A) est égal à 1 et (D) est égal à 0 ce qui indique qu'au moins une station qui était adressée n'avait pas la capacité mémoire suffisante pour accueillir intégralement le message. Pour ce faire il faut que chacune des stations adressées comporte un circuit de modification du champ (CV) qui satisfasse les trois tables de vérité suivantes: Premier cas en entrée de la station, (A) est égal à 0 et (D) est égal à 0 ce qui voulait dire qu'aucune station précédemment ne s'était reconnue comme adressée. Par conséquent la sortie de la station doit présenter les valeurs ci-après indiquées par (A) en sortie, (D) en sortie, dans la colonne (R̄) dans le cas où la station ne devait pas se reconnaître, dans la colonne (R.D) dans le cas où la station devait se reconnaître et copier l'information et dans la colonne (RD̄) dans le cas où la station devait se reconnaître mais n'avait pas la capacité mémoire suffisante pour prendre en compte intégralement le message.

| R̄ | R.D | RD̄ | |
|---|---|---|---|
| 0 | 1 | 1 | A en sortie |
| 0 | 1 | 0 | D en sortie |

Le deuxième cas correspond au cas où la station reçoit en entrée le bit (A) à 1 et le bit (D) à 1 ce qui veut dire qu'au moins une station en amont s'est reconnue comme adressée et qu'elle avait la possibilité de copier intégralement le message. Cette deuxième table représente en sortie les modifications que doit apporter la station au champ (CV) suivant les cas de figure.

| R̄ | R.D | RD̄ | |
|---|---|---|---|
| 1 | 1 | 1 | A en sortie |
| 1 | 1 | 0 | D en sortie |

Le troisième cas correspond à l'éventualité où en entrée on reçoit l'information (A) égale à 1 et (D) égale à 0 ce qui veut dire qu'une station qui s'est reconnue comme adressée et n'avait pas la possibilité de prendre en compte le message dans son intégralité.

| R̄ | R.D | RD̄ | |
|---|---|---|---|
| 1 | 1 | 1 | A en sortie |
| 0 | 0 | 0 | D en sortie |

En plus chaque station doit incrémenter de + 1 le contenu du compteur (CPT). Enfin de façon connue chaque station peut mettre à (1) le bit (E) du champ (FT) ce qui indique que la trame n'était pas correcte c'est-à-dire, soit qu'elle ne contenait pas de champ (FT), soit que le champ (DT) ou (FT) ne contenait pas les signaux (J, K) attendus, soit que des signaux (J, K) étaient présents entre les champs (DT) et ( FT), soit que les champs (DA), (SA), et (INFO) ne contenaient pas le minimum d'octet requis, soit qu'il n'y avait pas dans la trame un nombre entier d'octets, soit enfin que le champ (FCS) indiquait une incohérence de l'information retransmise. La réception par l'émetteur (EM) d'une trame contenant l'information (A = 1; C = 1; 0 = 1 et E = 0) indique que toute la transmission s'est bien passée et que l'échange de message a été correct. La réception par l'émetteur EM d'une trame contenant l'formation (A = 0; C = 0; D = 0; et E = 0) indique que la transmission s'est bien passée, mais qu'aucune station n'a été adressée.

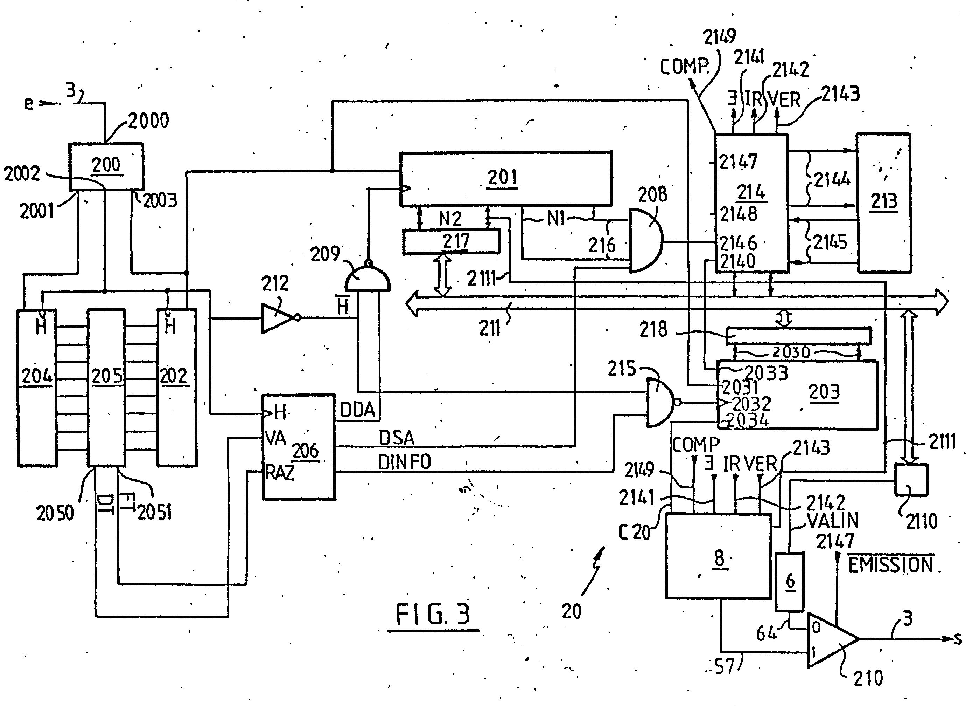

Pour mettre en oeuvre ce procédé chaque station doit pouvoir relier à sa sortie (s) un circuit (6) d'émission d'un champ vide (CV) à la suite du champ (FT) de chaque trame (4) émise. Un circuit (7) de réception et de stockage de l'information contenue dans un champ vide et de détection du passage du champ vide est relié à l'entrée (e) de la station. Un circuit (20) de reconnaissance de l'adressage ou du non-adressage de la station, de vérification que le message peut être mémorisé dans la station dans son intégralité, de copiage et de traitement de la trame contenant le message (INFO) est relié à l'entrée (e) de la station, à 14 sortie (s) de cette station et enfin à l'entrée d'un circuit (8) de modification de l'information véhiculée par le champ vide (CV) de la trame. Ce circuit (8) est relié en sortie à la sortie (s) de la station et en entrée à la sortie du circuit (7). Enfin la sortie du circuit (7) est reliée à l'entrée d'un circuit (5) assurant, au retour de la trame, la lecture de l'information contenue dans le champ vide et la vérification de la conformité de la transmission, lui-même relié au circuit (20). Dans un but de schématisation toutes les liaisons entre les différents circuits n'ont pas été représentées mais pourront être déduites de la description qui suit faite en référence aux figures 3, 5, 6, 7, 8. Ainsi par la suite on comprend que les circuits (6) et (8) sont reliés au travers de l'élément (210) à la sortie (s) de la station.

- La figure 3 représente le circuit de chaque station assurant la détection du type d'adressage la prise en compte de l'information et l'émission des signaux permettant l'acquittement au vol de la trame ceci pendant le temps de transfert de la trame entre la borne d'entrée (e) et la borne de sortie (s) de la station. Cette couche physique comprend un circuit de décodage (200) permettant d'assurer par la suite le mécanisme de reconnaissance de l'en-tête ou début de trame (DT), ainsi que la reconnaissance de fin de trame (FT). Le début de trame après décodage présente comme figuré (fig. 2) une succession de huit bits dont les deux premiers représentent une information non-donnée (J), (K), les deux suivants les données (0), les deux suivants les non-données (J), (K) , et les deux suivants les données (0). Le circuit (200), placé après un décodeur Manchester (non représenté), extrait des signaux reçus sur l'entrée (2000), un signal d'horloge (M), un signal (DONNEE) et un signal (VAL) (valeur de la donnée ou de la non-donnée). Ces signaux sont délivrés respectivement sur les sorties (2002), (2001), (2003) et répondent à la table de vérité ci-dessous.

| Donnée | 0 | 1 |
|---|---|---|
| Valeurs | | |
| 0 | J | 0 |
| 1 | K | 1 |

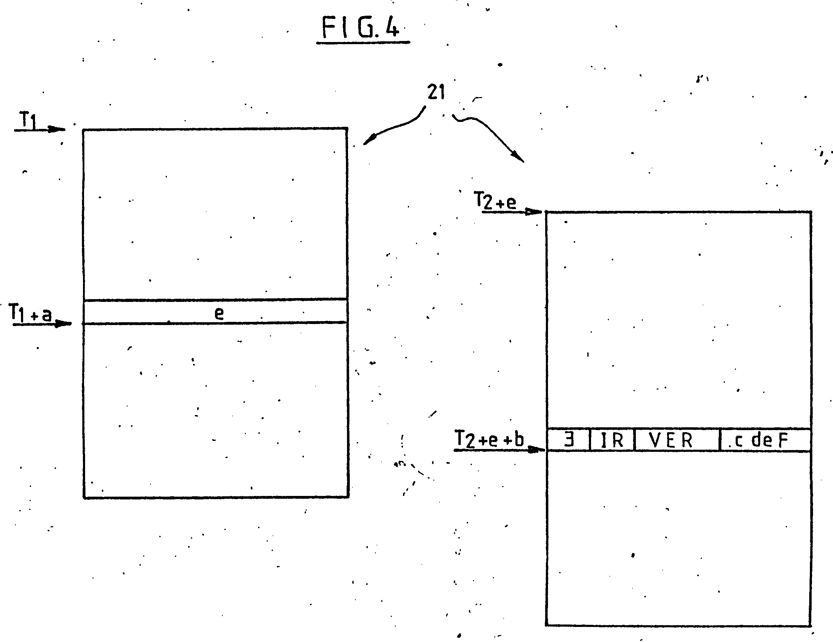

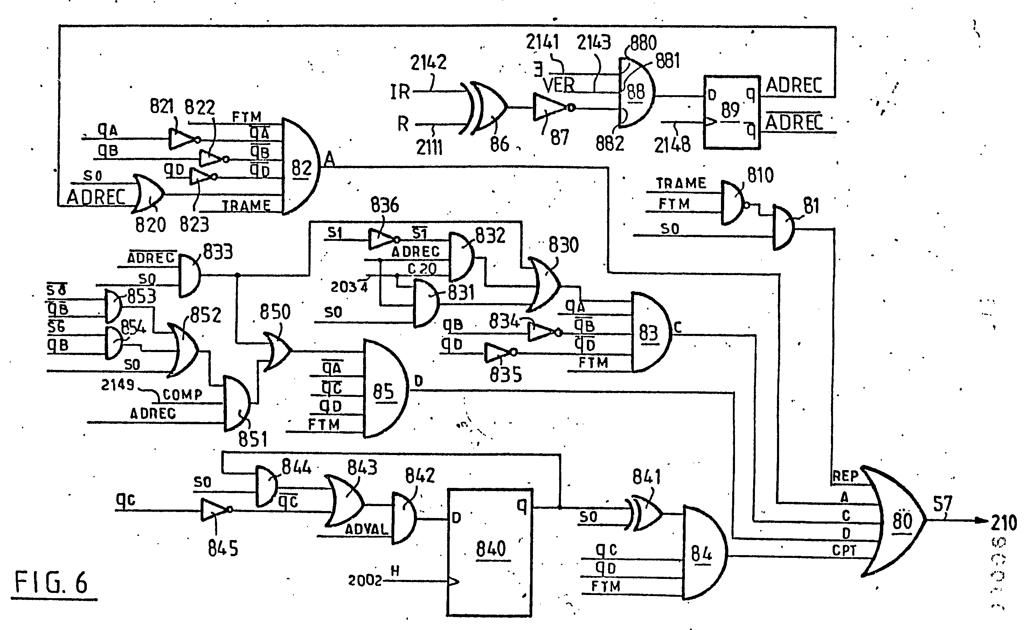

Compte tenu de la table de vérité la sortie (2003) (VAL) indique la valeur de la donnée ou de la non-donnée et un registre (202) à décalage branché sur la sortie (2003) sera chargé dans le cas d'un début de trame par les huit bits suivants: 0, 1, 0, 0, 1, 0, 0, et dans le cas d'une fin de trame par les bits suivants 0, 1, 1, 1, 0, 1, I, E, (E et I = valeur indifférente soit 0, soit 1). Le bit I à 1 indique le dernier paquet (ou l'unique paquet, d'un message transmis. La sortie donnée (2001) indique si l'on a une donnée ou une non-donnée. Dans le cas d'un début de trame ou d'une fin de trame on aura les huits bits suivants dans un registre à décalage (204) branché sur la sortie (2001) 0, 0, 1, 1, 0, 0, 1, 1, et dans le cas d'une donnée on aura un signal toujours égal à 1, et par conséquent les huits bits du registre (204) à 1. Les décalages sont commandés par le signal (H) délivré sur la sortie (2002) du circuit (200) et branché sur l'entrée d'horloge des registres (202) et (204). La comparaison des valeurs courantes des huit bits des registres (202) et (204) à des configurations de bits attendues sera effectuée par un circuit logique (205), facilement concevable pour l'homme de métier et dont les sorties (2050), (2051), délivrent respectivement les signaux (DT) et (FT) indiquant respectivement un début de trame et une fin de trame. Les sorties (2051) et (2050) sont reliées respectivement aux entrées (RAZ) (remise à zéro) et (VA) (validation) d'un compteur (206). L'entrée (H) (horloge) du compteur (206) reçoit le signal d'horloge provenant de la sortie (2002) du circuit (200). Le compteur (206) sert de séquenceur de début de trame. Il est mis à zéro à la mise sous tension de l'équipement, et cycliquement (en cas de fonctionnement normal) à la fin de la réception de chaque trame, afin d'être prêt d'opérer au début d'une nouvelle trame. Une première sortie du compteur (206) délivre le signal (DDA) (durée adresse destinataire) dont le niveau change lors du début du champ (DA) de la trame et reste inchangé pendant toute la durée correspondante à ce champ. Pour fixer les idées si le champ (DA) comprend N bits la durée du signal (DDA) correspond à N coups d'horloge. Une deuxième sortie (DSA) (durée adresse source) du circuit (206) délivre un signal dont le niveau change avec le début du champ (SA) et se prolonge pendant la durée de ce champ. Une troisième sortie (DINFO) (durée information) délivre un signal qui change de niveau au début du champ information (INFO) et reste à ce niveau pendant toute la durée de sa réception. Le signal de la sortie (DDA) du compteur (206) est envoyé sur une première entrée d'une porte NON-ET (209) dont la deuxième entrée reçoit le signal (H̄) délivré par un circuit inverseur (212) dont l'entrée est reliée à la sortie (2002) du circuit (200). La sortie de la porte (209) est reliée à l'entrée d'horloge d'un registre à décalage (201) à N bits dont l'entrée des données reçoit le signal (VAL) délivré par la sortie (2003). Le signal (DDA) valide donc la transmission du signal (H̄) à l'entrée d'horloge du registré à décalage (201) et va permettre le décalage des N bits du champ (DA). Ce nombre de bits (N) correspond au nombre de bits contenus dans le champ adresse destinataire. Une première partie du champ adresse destinataire constituée par N1 bits est reliée par une liaison (216) aux entrées parallèles d'une porte ET (208) dont une entrée reçoit également le signal (DSA) et qui lorsque toutes les entrées en parallèle ont la même valeur 1 délivre à sa sortie un signal envoyé sur une entrée d'interruption (2146) du microprocesseur (214) ou d'un équipement équivalent pour mettre en route le programme. La sortie de la porte ET (206) délivre donc un signal de valeur logique 1 lorsque la première partie N1 du champ adresse destinataire correspond à la valeur indiquant qu'il s'agit d'un adressage dit "logique" et par contre délivre un signal correspondant à une valeur logique zéro dans le cas où cette première partie N1 de l'adresse destinataire ne correspond pas a un adressage logique. La deuxième partie du champ adresse destinataire constitué par N2 bits est reliée au microprocesseur (214) par l'intermédiaire d'un circuit de multiplexage (217) et d'un bus de liaison (211). Cette deuxième partie correspond à l'éventuelle adresse logique. Le signal envoyé par la porte ET (208) en synchronisme avec le signal (DSA) déclenche la recherche de l'adresse logique dès l'apparition du signal (DSA). Le microprocesseur (214) est relié de façon connue par un bus d'adresse (2144) et un bus de donnée (2145) à une mémoire (213) qui sert de mémoire de stockage du programme de recherche d'adresse logique et de moyen de mémorisation des tables contenant les adresses logiques. Dans le but d'augmenter le nombre de possibilités d'adresses logiques tout en limitant la taille des tables en mémoire, et le nombre de bits du champ adresse destinataire, on utilise pour cet adressage le procédé qui va être décrit à l'aide de la figure 4. La table d'adresses logiques (21) contenue dans la mémoire (213) comporte en fait deux tables (T1 et T2) représentées à la figure 4. Le microprocesseur extrait de la deuxième partie N2 du champ adresse destinataire constituée par N2 bits un nombre "a" de bits représentés figure 2 et constitués par les bits de poids forts. Ces bits "a" sont fournis au microprocesseur (214) par la liaison (211) et servent à définir l'adresse T1 + a (figure 4) recherchée par le dispositif dans la première table (T1). Dans le cas où, à cette adresse il existe un contenu (e), par exemple non nul, le programme se poursuit en prélevant dans les N2 bits de la deuxième partie N2 du champ adresse destinataire un nombre "b" de bits (figure 2) que l'on ajoute au contenu (e) de la table (T1) ceci de façon à définir l'adresse recherchée (T2) + (e) + (b) dans une table (T2) dont le contenu est constitué par un bit ∃ indiquant l'existence de l'adresse logique, un bit (IR) indiquant l'image de routage, un champ de bits (VER) permettant une vérification des mécanismes liés à la reconnaissance d'adresse et un champ de bits (C de F) permettant un contrôle de flux, (capacité mémoire disponible pour cette adresse logique pour recevoir des messages). Dans le cas où dans la table (T2) le bit ∃ indiquant l'existence est positionné à 1 et où après application d'un algorithme de vérification la valeur indiquée par les N2 bits de la deuxième partie du champ adresse correspond à la valeur contenue dans le champ de vérification (VER) de la table (T2) le microprocesseur (214) envoie les signaux ( ∃ ) (2141), (IR) (2142), et (VER) (2143) à un circuit (8) de modification du bit (A) du champ (CV). Le signal (C20) émis sur la sortie (2034) du circuit (203) indique si la trame qui vient d'être reçue a pu être copiée complètement dans le circuit (203). En effet, une trame précédente pouvait s'y trouver encore partiellement (erreur de cadence en réception). Le signal (C20) permet au circuit (8) de calculer le bit (C) émis. Le microprocesseur (214) prend alors en compte les sorties parallèles (2030), reliées au bus (211) par un circuit de multiplexage (218), d'un registre à décalage (203) à (P) bits, (P correspondant au nombre de bits du champ information INFO). Ce registre à décalage reçoit - sur son entrée donnée (2031) les données fournies par le signal (VAL) délivré par la sortie (2003) du circuit (200) et sur son entrée d'horloge (2032) le signal délivré par une porte NON-ET (215) dont une première entrée reçoit le signal (H) délivré par la sortie du circuit (212) et dont une deuxième entrée reçoit le signal (DINFO) sortant du compteur (206). Le signal (DINFO) valide la transmission de l'horloge (H̄) pendant toute la durée de passage du champ information dans le circuit (200). Le microprocesseur (214) compare alors la valeur (C de F) trouvée dans la table (T2) (qui représente la capacité mémoire courante pour recevoir des messages sur l'adresse logique considérée) à la longueur (L) du message reçu (premier octet du champ INFO). Si (L) ≤ (C de F), la place mémoire est suffisante pour recevoir le message. Le microprocesseur (214) envoie alors le signal (COMP) à 1 (2149). Sinon si (L) > (C de F), (COMP) est émis à 0 vers le circuit (8). Ce signal (COMP) permet au circuit (8) de calculer le bit (D) émis. Dans le cas où à l'adresse indiquée par "a" il n'existe pas de contenu (e) la recherche est terminée et ceci indique que l'adresse logique n'existe pas dans la table (T2). Par conséquent le message transporté par la trame (4) et disponible sur les sorties (2030) du registre (203) ne doit pas être pris en compte par la station ce qui correspond aux colonnes (R̄) du tableau de modification (A) et (C). Ce procédé permet donc d'effectuer une recherche de l'adresse logique performante en temps, tout en limitant la taille des tables en mémoire, et tout en permettant de créer plusieurs milliers d'adresses logiques dans une station, dans un espace de plusieurs millions d'adresses possibles sur le réseau de communication. La liaison (2140, 2033) du microprocesseur vers le registre assure la validation de la sortie en parallèle des bits stockés dans le registre (203) vers les couches protocolaires supérieures de la station lorsque l'information doit être prise en compte par la station, c'est-à-dire lorsque l'adresse logique existe dans la mémoire (213), lorsque la trame a pu être copiée (momentanément) dans le circuit (203) et lorsque le message peut être mémorisé intégralement dans la mémoire du communicateur pour être traité par les couches protocolaires surpérieures. La sortie (2003) du circuit (200) délivrant les données est réliée par un circuit (8) de modification de la valeur des bits (A), (C), (D) et du compteur (CPT) du champ vide (CV) à un multiplexeur (210) qui est lui-même branché au travers d'un circuit de codage en Manchester (non représenté) à la sortie (S) de la station. Le multiplexeur (210) est commandé par la sortie (2147) du microprocesseur délivrant le signal ÉMISSION (signifiant lorsqu'il est à 1 que la station est en réception). Cette sortie (S) est reliée par un câble (3) à l'entrée d'une autre station. Une deuxième entrée du multiplexeur (210) reçoit du bus (211) au travers d'un circuit sérialisateur (2110) et de la sortie (64) d'un circuit (6), le signal valeur interne (VALIN) qui correspond à la succession de bits d'une trame qu'une station doit émettre lorsqu'elle travaille en émission et qui est complétée dans le circuit (6) par l'émission du champ vide (CV). Le circuit (8) représenté à la figure 6 est commandé par les sorties (2141), (2142), (2143) et (2149) du microprocesseur (214) et par la sortie (1034) du circuit (203). En fonctionnement si le signal ÉMISSION n'est pas actif (fonctionnement en mode émission), le multiplexeur délivre le signal issu de la sortie (64) du circuit (6) qui est la succession des bits d'une trame émise en série. Dans le cas où le signal ÉMISSION est actif (fonctionnement en mode réception) le multiplexeur (210) délivre sur sa sortie (s) le signal fourni par la liaison (57).

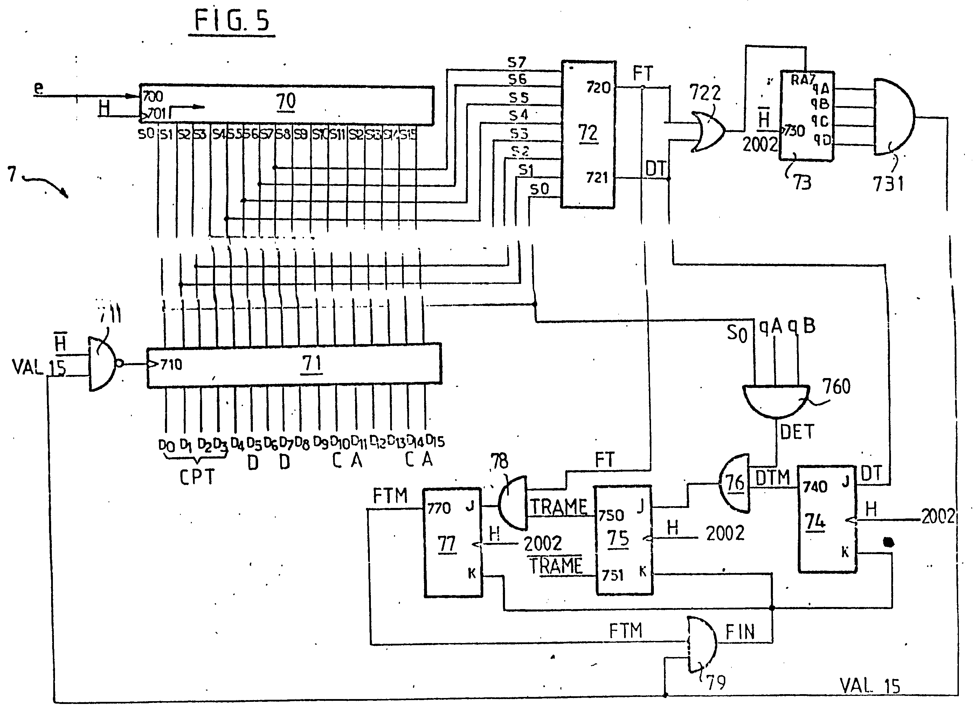

Le circuit (7) représenté en figure 5 reprend une partie du circuit (20) de la figure (3) et décrit plus précisément la réception de la fin d'une trame et plus particulièrement la mémorisation du champ vide (CV); le circuit (7) comporte un registre à décalage (70), dont l'entrée (700) reçoit les caractères arrivant sur l'entrée (e) de la station ces caractères ayant été au préalable décodés par un décodeur Manchester de façon à extraire du signal transmis les caractères et le signal d'horloge. Le signal d'horloge issu du décodeur Manchester non représenté ou de la sortie (2002) du circuit (200) est envoyé sur l'entrée d'horloge (701) du registre à décalage. Ce registre à décalage comporte 16 sorties (S.0) à (S.15) qui sont elles-mêmes reliées aux entrées d'un registre parallèle (71) à 16 bits assurant la mémorisation des informations présentes sur les sorties (S.0) à (S.15) lorsque son entrée (710) reçoit le signal de transfert délivré par la sortie (711) d'une porte NON-ET à deux entrées dont une entrée reçoit un signal (VAL15) et l'autre entrée reçoit le signal (N). Les sorties (S0) à (S7) du registre à décalage (70) sont reliées aux entrées d'un circuit (72) assurant la reconnaissance du début de trame et de la fin de trame et délivrant sur sa sortie (720) un signal de niveau 1 lorsqu'il détecte le champ (FT) de fin de trame et sur sa sortie (721) un signal de niveau 1 lorsqu'il détecte le champ (DT) de début de trame. Les signaux (DT) et (FT) sont fonctionnellement identiques à ceux générés figure (3) en sortie du circuit (205). Ces signaux (DT) et (FT) sont envoyés sur une porte OU (722) à deux entrées dont la sortie est reliée à l'entrée remise à zéro (RAZ) d'un compteur (73) modulo 16. L'entrée d'horloge (730) de ce compteur reçoit le signal (H̄) et les sorties (qA); (qB); (qC); (qD) de ce compteur sont reliées aux quatre entrées d'une porte ET-(731) dont la sortie délivre le signal (VAL15) qui passe au niveau 1 lorsque toutes les sorties (qA); (qB); (qC); (qD) sont à 1 c'est-à-dire que le compteur a compté seize coups d'horloge après l'apparition du signal début de trame ou fin de trame; (qA) est la sortie poids faible, et (qD) est la sortie poids fort du compteur (73). Ainsi grâce à ce signal (VAL15) et au front descendant d'horloge suivant, le circuit (711) assure le transfert des seize bits rentrés en serie dans le registre à décalage (70) et sortis en parallèle dans le registre (71) et ces seize bits sont mémorisés sur les sorties (D0) à (D15). Le signal début de trame délivré par la sortie (721) du circuit (72) est envoyé à l'entrée (J) d'une bascule JK (74) dont la sortie (740) délivre son signal à l'entrée d'une porte ET-(76) recevant sur sa deuxième entrée un signal de détection de trame (DET) délivré par un circuit de traitement du quatrième bit du premier octet suivant le champ (DT) et qui lorsqu'il est positionné à 1 indique l'arrivée d'une trame. Ce bit (DET) à 0 indique la réception d'un jeton. La sortie de la porte ET-(76) est reliée à l'entrée (J) d'une bascule (75) dont la sortie (750) délivre un signal (TRAME) à l'entrée d'une porte ET-(78) dont la deuxième entrée reçoit le signal fin de trame (FT) délivré par la sortie (720) du circuit (72). La sortie (751) délivre le signal (TRAME). La sortie de la porte ET-(78) est reliée à l'entrée (J) d'une bascule JK (77) dont la sortie (770) délivre un signal (FTM) (fin de trame mémorisée). Ce signal (FTM) est envoyé sur une première entrée d'une porte ET-(79) dont la deuxième entrée reçoit le signal (VAL15) et dont la sortie délivre le signal (FIN) qui est envoyé sur les entrées (K) des bascules (74), (75) et (77) de façon à assurer leur remise à 0 lorsque la trame suivie des 16 bits du champ vide est passée et qu'il n'y a plus d'informations utiles à l'entrée de la station. Le signal (DET) est délivré par une porte (760) à trois entrées dont une première entrée reçoit la sortie (50) du registre à décalage (70) les deux entrées suivantes reçoivent respectivement les sorties (qA) et (qB) du compteur (73). Ainsi dès que le circuit (72) détecte un début de trame celui-ci est mémorisé par la bascule (74). Puis par l'entrée (S0) du registre à décalage et par les sorties, (qA) et (qB) du compteur (73) on sélectionne le quatrième bit du premier octet suivant l'apparition du signal (DTM), puisque que l'on prend en compte le caractère présent en (S0) au moment où (qA), (qB) sont égaux à 1 c'est-à-dire au quatrième coup d'horloge. Dans le cas où (S0) avait pour valeur 1, c'est-à-dire que le signal (DET) indique bien que l'on avait à faire à une trame, la sortie de cette porte (760) et de la porte ET-(76) positionne à 1 la bascule (75) qui va mémoriser le fait que l'on a une trame a traiter. L'apparition du signal fin de trame (FT) va faire monter la sortie (FTM) de la bascule (77) à 1 ce qui va indiquer que la fin de trame est mémorisée et produire l'apparition du signal (FIN) dès que le signal (VAL15) va monter à 1 c'est-à-dire 16 coups d'horloge après l'apparition du signal (FT), ce qui correspond à la fin de la réception du champ vide (CV). A ce moment là, les bascules (74), (75) et (77) sont remises à 0 par ce signal (FIN) qui indique la fin définitive de la trame.

La figure 6 représente le circuit (8) de modification du champ vide et de répétition de l'information reçue. Ce circuit comprend une porte OU-(80) à plusieurs entrées dont la sortie est reliée au travers du multiplexeur (210) et d'un codeur Manchester non représenté à la sortie (s) de la station. Les entrées de cette porte OU-(80) reçoivent les signaux (REP) (répétition), (A) (adresse reconnue), (C) (copie), (D) (diffusion), (CPT) (compteur du nombre de stations). Ces signaux sont fournis respectivement par les sorties des portes ET-(81), (82), (83), (85), (84). La porte ET-(81) délivrant le signal (REP) (répétition) reçoit sur une première entrée le signal (50) délivré par la sortie du registre à décalage (70) et sur une deuxième entrée la sortie d'une porte NON-ET (810) recevant sur ses entrées le signal (TRAME) délivré par la sortie (750) de la bascule (75) et sur sa deuxième entrée le signal (FTM) délivré par la sortie (770) de la bascule (77). Ainsi lorsque le signal TRAME = 0 (inter-trame), et dès l'apparition du signal (TRAME) et pendant tout le temps où (FTM) restera au niveau 0 la porte ET-(81) va reproduire le signal (50) et donc répéter en sortie l'information arrivaint en entrée sur le registre (70). Lorsque le signal (FTM) passe au niveau 1 et que le signal (TRAME) reste maintenu au niveau 1 la sortie de la porte NON-ET (810) passe au niveau 0 et par conséquent la porte (81) ne transmet plus le signal (S0). Donc il n'y a plus reproduction du signal d'entrée, et ceci pendant les 16 bits du champ vide (CV) puisque le signal (TRAME) revient au niveau 0 lorsque le signal (FIN) apparaît c'est-à-dire après les 16 bits du champ vide (CV). Le signal représentant le bit (A) est délivré par la sortie de la porte ET-(82) recevant en entrée le signal (FTM) délivré par la sortie (770) de la bascule (77), les signaux (q̄Ā), (q̄B̄), (q̄D̄) délivrés par les sorties des inverseurs (821), (822) et (823) reliés aux entrées (qA), (qB), (qD) du compteur (73), la sortie d'une porte OU-(820) et le signal (TRAME) délivré par la sortie (750) de la bascule (75). La porte OU-(820) reçoit sur une première entrée le signal (S0) et sur une deuxième entrée un signal (ADREC) (adresse reconnue) délivré par la sortie (q) de la bascule (89).

Ce signal (ADREC) est délivré par un circuit constitué par une porte ET-(88) à trois entrées recevant sur son entrée (880) un signal Ǝ provenant de la sortie (2141) indiquant que l'adresse logique existe, sur sa deuxième entrée (881), un signal (VER) provenant de la sortie (2143) indiquant que la vérification des mécanismes de reconnaissance d'adresse, a été faite et qu'elle est correcte, et sur sa troisième entrée (882) la sortie d'un inverseur (87) dont l'entrée reçoit la sortie d'un OU-EXCLUSIF (86) à deux entrées. La première entrée reçoit le signal (IR) image de routage fourni par la sortie (2142) et la deuxième entrée reçoit le signal (R) fourni par la liaison (2111) et délivrant un signal correspondant à la valeur du bit (R) du champ (DA) de la trame. Le signal (R) reçu dans le champ DA de la trame doit être égal au bit IR trouvé dans la table T2. L'ensemble de ces signaux délivre en sortie un signal à l'entrée (D) d'une bascule (89) dont la sortie est envoyée sur la porte (820). La sortie de la bascule (89 ) est au niveau 1 lorsque la sortie de la porte ET (88) est au niveau 1 et que l'entrée d'horloge de la bascule reçoit le signal émis par la sortie (2148) du microprocesseur. La sortie de la porte ET (88) est au niveau 1 lorsque chacune de ses entrées est au niveau 1 c'est-à-dire lorsque l'entrée (880) ( Ǝ , existence de l'adresse dans la table), l'entrée (881) (VER, vérification du processus de recherche de l'adresse) et l'entrée (882) (issue de comparateur (55) entre IR et R) sont au niveau 1. Le comparateur OU-EXCLUSIF (86) suivi de l'inverseur (87) fournit un niveau 1 sur l'entrée (882) si et seulement si (IR) (fourni par la table T2), et (R) (reçu dans le champ adresse destinataire de la trame courante) sont égaux. Par conséquent ce circuit permet de s'assurer que dans le cas où la station a reconnu l'adresse logique le signal (ADREC) est au niveau 1. Ainsi la sortie de la porte (820) est au niveau 1 si au moins un des deux signaux (S0) ou (ADREC) est au niveau 1, ce qui correspond au fait que, lorsque (S0) est au niveau 1 ((A) reçu = 1) une station en amont s'est reconnue comme adressée et lorsque (ADREC) est au niveau 1 la station elle-même s'est reconnue comme adressée. Pour sélectionner parmi les caractères entrant et passant sur la sortie (S0) du registre à décalage (70) ceux qui correspondent au bit (A) du champ vide (CV), on utilise les sorties (qA); (qB); (qD) du compteur (73) et le signal fin de trame mémorisé qui indique que le champ fin de trame (FT) vient de passer. Les signaux (q̄Ā), (q̄B̄), (q̄D̄) indiquant que l'on prend en compte le signal présent sur la sortie (S0) lors du premier coup et du cinquième coup d'horloge ce qui correspond sur la table de vérité ci-après à la position 0 et 4. En effet compte tenu de la représentation de la trame et du champ vide sur la figure 2 et du fait que le décalcage des caractères dans le registre (70) se produit de la gauche vers la droite, le premier coup d'horloge fera apparaître sur (S0) le bit (A) de la position 15 du champ vide (CV) et le cinquième coup d'horloge fera apparaître le bit (A) de la position 11 du champ vide (CV). Le signal (TRAME) envoyé sur la porte ET-(82) permet de s'assurer que l'on ne va pas prendre en compte le signal (S0) lorsqu'on est en train de traiter un passage de jeton, par exmple, car dans ce cas (TRAME) est à 0. La sortie de la porte ET-(83) délivre le bit (C), cette porte recevant sur ses entrées les signaux (qA); (q̄B̄); (q̄D̄); (FTM) et la sortie d'une porte OU-(830) à trois entrées dont la première entrée reçoit la sortie d'une porte ET-(833), la deuxième entrée la sortie d'une porte ET-(832), la troisième entrée la sortie d'une porte ET-

(831). Le signal (q̄B̄) est fourni par un inverseur (834) dont l'entrée est branchée à la sortie (qB) du compteur (73). Le signal (q̄D̄) est fourni par la sortie d'un inverseur (835) dont l'entrée est branchée à la sortie (qD) du compteur (73). Une première entrée de la porte (831) est reliée à la sortie (S0) du registre à décalage (70), une deuxième entrée reçoit le signal (ADREC) délivré par la pascule (89), une troisième entrée reçoit un signal (C20) (copie) délivré par la sortie (2034) du circuit (203); ce signal (C20) indique, lorsqu'il est à 1, que la trame courante a pu être copiée complétement dans le circuit (203). (C20) indique, lorsqu'il est à 0, qu'il y a eu une erreur de cadence en réception. La porte ET-(832) reçoit également les signaux (ADREC) et (C20) copie et sur une troisième entrée un signal (S̄1) délivré par un inverseur (836) relié à la sortie (S1) du registre à décalage (70). Le bit (C) émis sera au niveau 1 lorsque le signal (FTM) fin de trame sera au niveau 1 que la sortie de la porte OU-(830) est au niveau 1 et que les signaux (qA); (q̄B̄) et (q̄D̄) sont au niveau 1. En se référant à la table de vérité ci-dessous les signaux (qA); (q̄B̄) et (q̄D̄) sont au niveau 1 lors des deuxième et sixième coups d'horloge ce qui correspond aux positions 14 et 10 des bits (C) dans le champ (CV).

| S | qD | qC | qB | qA | Coup d'horloge |
|---|---|---|---|---|---|
| 0 | 0 | 0 | 0 | 0 | 1 |
| 1 | 0 | 0 | 0 | 1 | 2 |
| 2 | 0 | 0 | 1 | 0 | 3 |
| 3 | 0 | 0 | 1 | 1 | 4 |
| 4 | 0 | 1 | 0 | 0 | 5 |
| 5 | 0 | 1 | 0 | 1 | 6 |
| 6 | 0 | 1 | 1 | 0 | 7 |
| 7 | 0 | 1 | 1 | 1 | 8 |
| 8 | 1 | 0 | 0 | 0 | 9 |
| 9 | 1 | 0 | 0 | 1 | 10 |
| 10 | 1 | 0 | 1 | 0 | 11 |
| 11 | 1 | 0 | 1 | 1 | 12 |
| 12 | 1 | 1 | 0 | 0 | 13 |
| 13 | 1 | 1 | 0 | 1 | 14 |
| 14 | 1 | 1 | 1 | 0 | 15 |
| 15 | 1 | 1 | 1 | 1 | 16 |

La sortie de la porte OU-(830) sera au niveau 1 lorsque l'une des sorties des portes ET-(831), (832), (833) sera au niveau 1. La sortie de la porte ET-(831) est au niveau 1 lorsque l'entrée (S0) est au niveau 1 ce qui indique que le bit (C) arrivant était au niveau 1 et que les signaux (ADREC) et (C20) (copie) sont également au niveau 1. Ceci correspond à la colonne (R.C) de la deuxième table de vérité. La sortie (832) est au niveau 1 lorsque l'entrée (S1) est au niveau 1, l'entrée (S1) lors des deuxièmes et sixièmes coups d'horloge représente l'inverse du bit (A) reçu, c'est-à-dire l'indication qu'aucune station en amont ne s'est reconnue comme adressée. Cette situation correspond à la colonne (R.C) de la première table de vérité. Enfin la sortie (833) est au niveau 1 lorsque le signal (ĀD̄R̄ĒC̄) est à 1 et que (S0) est

à 1. Ceci exprime le fait que l'on ne modifie pas la valeur du bit (C) reçu sur (S0) lorsque l'adresse n'a pas été reconnue par la station. En effet dans ce cas seule la sortie (833) peut être à 1 les autres sorties des portes (832) et (831) restant à 0 puisque (ADREC) est égal à 0. Cette situation correspond aux colonnes (R̄) des tables donnant (A) et (C) en sortie. Le signal (CPT) est délivré par la sortie de la porte ET-(84) dont les entrées reçoivent les signaux (qC), (qD), (FTM) et la sortie d'une porte OU-EXCLUSIF (841). Cette porte OU-EXCLUSIF reçoit sur une de ses entrées le signal (S0) du registre à décalage (70) et sur sa deuxième entrée la sortie d'une bascule (840) dont l'entrée (D) reçoit la sortie d'une porte ET-(842). Cette porte ET-(842) reçoit une première entrée (ADVAL) (adresse valide) et la sortie d'une porte OU-(843). Le signal (ADVAL) indique un fonctionnement correct de la station ceci qu'il y ait eu reconnaissance ou non de l'adresse. Ce signal est fourni par des circuits de contrôle du bon fonctionnement du matériel de communication de la station. La porte OU-(843) reçoit sur une première entrée le signal (q̄C̄) délivré par un inverseur (845) relié à la sortie (qC) du compteur (73) et sur une deuxième entrée la sortie d'une porte ET-(844) dont une première entrée reçoit le signal (S0) et une deuxième entrée reçoit la sortie (q) de la bascule (840). Ainsi lorsque, (qC) et (qD) sont à 1 ainsi que le signal de fin de trame (FTM), la sortie de la porte (84) reflète la sortie du OU-EXCLUSIF (841). (qC) et (qD) sont à 1 du treizième au seizième coup d'horloge suivant une fin de trame, ce qui correspond aux positions du champ vide représentant le compteur de station (CPT). Le circuit constitué par les portes (841), (842), (843), (844) et la bascule (840) se comporte comme un additionneur qui ajoute plus 1 à la valeur reçue dans le registre à décalage et représentant l'état du compteur (CPT) reçu. En effet la sortie de la porte (841) passe à 0 si (S0) est à 1 et si la sortie de la bascule (840) est à 1 ainsi que si (S0) est à 0 et si la sortie de la bascule (840) est à 0, et elle passe à 1 soit lorsque (S0) égal 1, et la sortie de la bascule (840) est égale à 0, soit lorsque la sortie de la bascule (840) est à 1 et que (S0) est à 0. Si le signal (ADVAL) reste à 0 (fonctionnement incorrect de la station), la sortie (q) de la bascule (840) restera à 0, la sortie du OU-EXCLUSIF (841) sera strictement identique à (S0), et donc la valeur de (CPT) émise (entrée porte (80)) reproduira la valeur des 4 bits reçus sur l'entrée (e) de la station entre le treizième et le seizième coup d'horloge qui suit (FT), c'est-à-dire la valeur du compteur (CPT) reçu et non modifiée. Au départ, la sortie de la bascule (840) est à 1 lorsque le signal (ADVAL) indiquant un fonctionnement correct est à 1 et lorsque le signal (q̄C̄) est à 1 ou la sortie de la porte (844) à 1. Le signal (q̄C̄) est à 1 lors des coups d'horloge 1 à 4 et des coups 9 à 12 ce qui permet de positionner à 1 la bascule (840) juste avant le coup qui correspond à l'apparition du premier bit représentatif du compteur (CPT) reçu sur la

broche (S0) du registre à décalage (70). L'addition se fait en série bit par bit, 4 fois consécutivement, et la sortie de la bascule (840) représente en fait le report (0 ou 1) de l'opération d'addition sur le bit précédent. Ainsi, cette série est à 1 au départ (treizième coup d'horloge, pour simuler un report initial, et ainsi effectuer l'opération d'addition +1. Au treizième coup d'horloge le bit (S0) se trouve inversé entre l'entrée et la sortie de la porte (841), car la sortie (q) de la bascule (840) est à 1 (opération +1); simultanément, la sortie de la porte (844) dépend du signal (S0) et de la sortie de la bascule (840) qui avait été positionnée à 1. Par conséquent si (S0) correspondant au treizième coup d'horloge représente la valeur 0 la sortie de la bascule (840) passe à 0 (pas de report), tandis que si (S0) représente la valeur 1 la sortie de la bascule (840) reste à 1 (report) ce qui permettra au coup d'horloge suivant d'ajouter au signal (S0) la valeur 1. Ce circuit se comporte donc code un circuit d'incrémentation de +1 du champ compteur (CPT) Le signal (D) émis est délivré par la sortie de la porte ET (85).

La porte ET 85 reçoit sur ses entrées les signaux ($\bar{q}\bar{A}$), ($\bar{q}\bar{C}$), (qD), (FTM) et la sortie de la porte OU (850). Les signaux ($\bar{q}\bar{A}$), ($\bar{q}\bar{C}$) et (qD) permettent la transmission d'un signal apparaissant à la sortie de la porte OU (850) lorsque ($\bar{q}\bar{A}$), ($\bar{q}\bar{C}$), (qD) et (FTM) sont à 1. Ceci se produit au 9ème et 11ème coup de l'horloge ce qui coïncide avec la présence du bit correspondant à l'information (D) reçue sur la borne (S0) du registre à décalage (70). Par conséquent la sortie de la porte OU (850) ne sera transmise que pendant les 9ème et 11ème coup d'horloge (voir table de vérité de (qA), (qB), (qC), (qD) ci-dessus) suivant l'apparition du signal (FTM) indiquant la détection du champ fin de trame (FT). La porte OU (850) reçoit d'une part la sortie d'une porte ET (833), d'autre part la sortie du porte ET (851). La porte ET (833) reçoit sur son entrée un signal ($\overline{ADREC}$) et sur une deuxième entrée le signal (S0) provenant du registre à décalage (70). Par conséquent la sortie de la porte ET (833) permet de recopier la valeur du bit (D) reçu lorsque la station ne s'est pas reconnue comme adressée. La porte ET (851) reçoit, sur une première entrée, un signal (ADREC), sur une deuxième entrée, le signal (COMP) émis par la sortie (2149) du microprocesseur (214) et sur une troisième entrée la sortie d'une porte OU (852). La porte OU (852) reçoit, sur une première entrée, le signal (S0) provenant du registre à décalage (70), sur une deuxième entrée, la sortie d'une porte ET (854) et sur une troisième entrée, la sortie d'une porte ET (853). La porte ET (853) reçoit, sur une première entrée, un signal ($\bar{S}8$) provenant après inversion de la sortie (S8) du registre à décalagé (70) et sur une deuxième entrée, un signal ($\bar{q}B$) provenant après inversion de la sortie (qB) du compteur (73). La porte ET (854) reçoit, sur une première entrée, un signal ($\bar{S}6$) provenant après inversion de la sortie (S6) du registre à décalage (70) et sur une deuxième entrée, un signal (qB) provenant du compteur (73). Le signal (COMP) est élaboré par le microprocesseur (214) par comparaison des bits (C de F) lus dans la table T2 de la mémoire (213) d'une part, et des bits (L) du champ information obtenus sur le groupe d'entrées (218), indiquant la longueur totale du message reçu d'autre part. Ces bits (L) sont extrait du registre (203) par le multiplexeur (218) (figure 3), et les bits du champ (C de F) sont extraits de la table (T2) mémorisée dans la mémoire (213) à l'adresse (T2) + (e) + (b), fournie par le procédé d'adressage décrit ci-dessus. Au 9ème coup d'horloge suivant la détection de la fin de trame (FT) le signal ($\bar{q}B$) est au niveau 1 et à ce moment là la sortie (S8) délivre la valeur d'un bit qui est représentatif du premier bit (A) reçu. Par conséquent, la sortie de la porte (853) sera au niveau 1 que lorsque le bit (A) reçu sera au niveau 0 c'est-à-dire lorsque aucune station en amont ne s'est reconnue comme adressée. De même au 11ème coup d'horloge le signal (qB) est au niveau 1 et à ce moment là la sortie (S6) du registre (70) délivre la valeur représentative du deuxième bit (A) reçu, celui qui est figure sur la figure 2 dans la position 11. Lorsque ce bit (A) est également à 0 la sortie de la porte (854) est à 1. Ainsi quelle que soit la valeur du signal (D) reçu en (S0) si aucune station ne s'est reconnue comme adressée en amont les sorties des portes (853) et (854) seront au niveau 1 et par conséquent la porte (851) délivrera le signal (COMP) fourni en sortie du microprocesseur (214) si le signal (ADREC) est au niveau 1 ce qui correspond au fait que la station s'est reconnue comme adressée. Par contre si les bits (A) des positions 11 et 15 étaient à 1 les sorties des portes (853) et (854) seraient au niveau 0 et la sortie de la porte OU (852) ne peut être au niveau 1 que si le signal (S0) représentatif du bit (D) reçu est au niveau 1. Cette situation correspond au fait que toutes les stations qui se sont reconnues comme adressées en amont ont eu la capacité mémoire suffisante pour prendre en compte intégralement le message en cours de réception. Dans ce cas la sortie de la porte (851) varie comme la sortie (2149) délivrant le signal (COMP). Si par contre la valeur du bit (D) reçu en (S0) est égale à 0 la sortie de la porte (851) transmet la valeur 0 ce qui indique qu'une station en amont dans le réseau n'a pas pu accueillir le message courant. Lorsque toutes les stations en amont de la station se sont reconnues comme adressées et avaient la capacité mémoire suffisante pour recevoir le message, le signal (COMP) détermine la valeur du bit (D) à émettre en fonction de la comparaison des bits (L) représentatifs de la longueur du message reçu et (C de F) représentatifs du crédit mémoire disponible dans la station pour l'adresse logique qui a permis d'entrer ce message. Si le crédit mémoire est supérieur à la longueur L reçue, le signal (COMP) est au niveau 1 et par conséquent le bit (D) émis sera au niveau 1 pour autant que la station se soit reconnue comme adressée. Dans le cas où le crédit mémoire est insuffisant le signal (COMP) sera au niveau 0 et par conséquent le bit (D) émis sera au niveau 0 ce qui amènera les stations suivantes à maintenir ce niveau 0 pour le bit (D) du champ (CV).

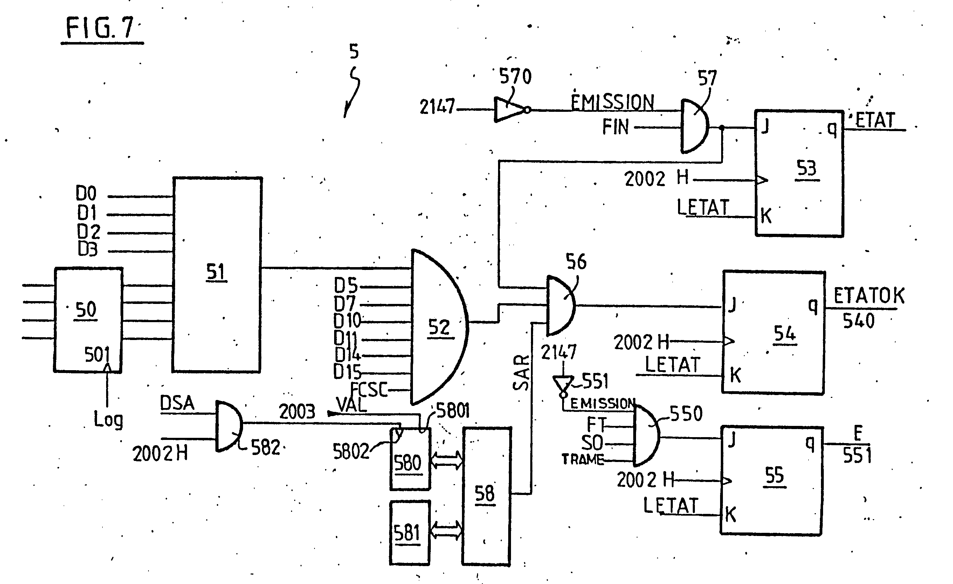

La figure 7 représente le circuit (5) de lecture de l'information contenue dans le champ (CV) au retour d'une trame dans une station émettrice et de vérification de la conformité de l'échange du message dans le réseau. Ce circuit comporte un registre (50) permettant par chargement par logiciel sur l'entrée (501) d'enregistrer une valeur représentative du nombre de stations présentes sur le réseau. Ce registre (50) est relié par ses sorties aux entrées d'un comparateur (51) dont les autres entrées reçoivent les signaux (D0) à (D3) du registre (71) de la figure 3. Les signaux (D0) à (D3) représentant lors de l'apparition du seizième coup d'horloge suivant la fin de trame (FT) la valeur du compteur (CPT) au retour à la station d'émission. En cas de concordance des deux valeurs, le comparateur (51) délivre sur sa sortie un signal de valeur 1 à une entrée d'une porte ET-(52) dont les autres entrées reçoivent les signaux (D5), (D7), (D10), (D11), (D14), (D15) et un signal (FCSC). Les signaux (D5), (D7), (D10), (D11), (D14), (D15) représentent respectivement les valeurs des bits (D), (D), (C), (A), (C), (A) que l'on a fait figurer en dessous des broches correspondantes du registre (71) de la figure 3. Lorsque toutes ces valeurs sont à 1, l'échange de message entre les différentes stations du réseau est correct et par conséquent la sortie de la porte ET-(52) est à 1. La génération du signal (FCSC), bien connue de l'homme de métier n'est pas représentée ici (code détecteur d'erreur). Le signal (FCSC) indique, lorsqu'il est à 1, que la trame, pendant le parcours de l'anneau, n'a pas été altérée par une erreur (de transmission de parasitage par exemple). La sortie de la porte (52) est reliée à une porte ET-(56) à trois entrées dont une deuxième entrée reçoit un signal (SAR) (Adresse source reconnue) qui indique par son niveau 1 que l'émetteur a bien reconnu son adresse dans la trame qui lui revient. Le signal (SAR) est délivré par la sortie d'un comparateur (58) dont les entrées reçoivent d'une part un registre (581) de mémorisation d'une adresse source précâblée et d'autre part un registre à décalage (580) recevant sur son entrée (5801) le signal (VAL) et sur son entrée d'horloge (5802) la sortie d'une porte ET (582) recevant en entrée le signal (DSA) provenant du circuit (206) et le signal (H) provenant de la sortie (2002) du circuit (200). La troisième entrée de la porte ET-(56) reçoit le signal de sortie d'une porte ET-(57) à deux entrées dont la première entrée reçoit le signal (FIN) fourni par la porte (79), et la deuxième entrée un signal (EMISSION) délivré par un inverseur (570) relié à la sortie (2147) du circuit de traitement (20), ce signal (EMISSION) indiquant que la station considérée est en émission. Lorsque le signal (EMISSION) est à 1, et le signal (FIN) est à 1 la sortie (57) est à 1. La sortie de la porte ET-(57) est envoyée à l'entrée (J) d'une bascule (53) dont la sortie passe au niveau 1 sur le coup d'horloge suivant le passage de la sortie de la porte ET-(57) à 1. Cette sortie (ETAT) indique que la trame est revenue à la station émettrice et réveille le logiciel de cette station. La sortie de la porte ET-(56) est reliée à l'entrée (J) d'une bascule (54) dont la sortie (540) délivre un signal (ETAT OK) au niveau 1 lorsque la sortie de la porte ET-(56) est au niveau 1. Cette sortie (ETAT OK) indique que la vérification du champ vide (CV) est correcte et qu'il n'y a pas eu de défauts dans l'échange de message entre les stations. Enfin une bascule (55) délivre sur sa sortie (551) un signal erreur (E). Cette bascule (55) reçoit sur son entrée (J) la sortie d'une porte ET-(550) dont les entrées reçoivent le signal (EMISSION) délivré par un inverseur (551) relié à la sortie (2147) du circuit (20), un signal (FT) fin de trame, le signal (S0) et le signal (TRAME). Donc lorsque la station est en émission, que la fin de trame est détectée et que le signal (TRAME) est encore à la position 1 le bit (S0) du registre (70) représente le dernier bit du champ fin de trame (FT) c'est-à-dire la valeur du bit (E). Si cette valeur est égale à 0 ceci indique qu'aucune erreur de transmission n'a été décelée lors du passage dans les différentes stations. Dans le cas où (E) est égal à 1, ceci indique une erreur dans les transmissions entre les stations. Les bascules (53), (54) et (55) sont remises à zéro pour être correctement réutilisées à la prochaine trame émise, par le signal (LETAT) de lecture par le logiciel des signaux (ETAT), (ETAT OK) et E.

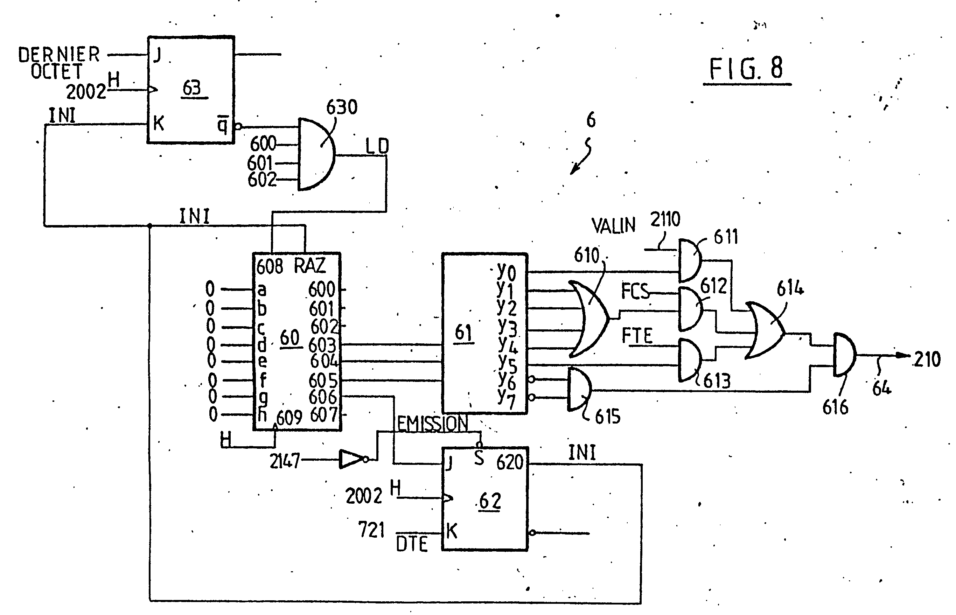

La figure 8 représente le circuit (6) d'émission du champ vide (CV) après la trame. Ce circuit comporte un compteur 8 bits (60) dont les entrées de chargement (a) à (h) reçoivent un signal de valeur 0. L'entrée de chargement (608) de ce compteur reçoit le signal (LD) et l'entrée (RAZ) remise à 0 reçoit le signal (INI). Les sorties (600) à (6002) du compteur sont reliées aux entrées d'une porte ET-(6630) dont une dernière entrée reçoit la sortie (q̄) d'une bascule (63). Cette porte ET-(630) délivre le signal (LD) de chargement. La bascule (63) reçoit sur son entrée (J) un signal indiquant que le dernier octet du champ information (INFO) vient d'être émis. Quand ce signal est au niveau 1, la sortie (q̄) de la bascule (63) passe au niveau 0 et par conséquent le signal (LD) reste en permanence au niveau 0. Tant que le signal (DERNIER OCTET) (signalant le dernier octet du champ INFO) est au niveau 0 la sortie (q̄) est au niveau 1 et la sortie (LD) de la porte (630) passe au niveau 1 tous les 8 coups d'horloge, et provoque le chargement du compteur (60) par huit 0 (entrées (a) à (h)). Par con-séquent tant que le dernier octet, du champ (INFO) ne s'est pas présenté à l'émission, le compteur (60) fonctionne comme un compteur de bits, les sorties (603) à (606) restant en permanence à 0. Dès le 9ème coup, suivant l'apparition du signal DERNIER OCTET la sortie (603) du compteur (60) passe au niveau 1 pendant un octet puis la sortie (694) passe au niveau 1 pendant deux octets, puis c'est la sortie (605) qui reste au niveau 1 pendant 4 octets. Ces sorties (603), (604), (605) sont envoyées surr les entrées d'un circuit décodeur (61). La sortie (Y0) de ce circuit décodeur (61) reste au niveau 1 tant qu'aucune des entrées du circuit est au niveau 1. Cette sortie (Y0) est reliée à l'entrée d'une porte ET-(611) dont la deuxième entrée reçoit les données à émettre tout le champ (INFO) inclus, ces données à émettre étant fournies par la sortie (VALIN) du circuit (2110). La sortie de cette porte ET-(611) est reliée à l'entrée d'une porte OU-(614) dont la sortie est reliée à l'entrée d'une porte ET-(616) la sortie de cette porte ET étant reliée par le multiplexeur (210) et par un circuit de codage en Manchester (non représenté) à la sortie (s) de la station. Par conséquent, tant que l'on n'a pas détecté le début du dernier octet de la trame le circuit fontionne de façon à transmettre les données à émettre et dès le 9ème coup d'horloge suivant l'apparition du signal (DERNIER OCTET) la porte (611) se bloque et les données à émettre ne sont plus envoyées. Les sorties (Y0) à (Y7) du circuit (61) représentent le décodage des 8 octets suivant l'apparition du signal (DERNIER OCTET) et représenté par le code binaire sur trois bits fournis par les sorties (603) à (605) du compteur (60). Pendant les quatre octets suivants, une des sorties (Y1) à (Y4) est au niveau 1 et par conséquent la sortie de la porte OU-(610) émet un niveau 1 à l'entrée de la porte ET-(612) dont la deuxième entrée reçoit le signal délivré par la sortie (VALIN) du circuit (2110) représentant les valeurs des caractères du champ (FCS). La sortie (612) est envoyée à l'entrée de la porte OU-(614). Pendant l'octet suivant la sortie (Y5) est au niveau 1; cette sortie est envoyée sur une porte ET-(613) dont une deuxième entrée reçoit le champ (FTE) fin de trame émis délivré par la sortie (VALIN) du circuit (2110). La sortie de cette porte (613) est reliée à une entrée de la porte (614). Enfin pendant encore deux octets les sorties inversées (Y6) puis (Y7) sont au niveau 0 et par conséquent la sortie de la porte ET-(615) est au niveau 0 ce qui positionne également la sortie de la porte ET-(616) au niveau 0 puisque la sortie de la porte ET-(615) est reliée à l'entrée de la porte ET-(616). Par ailleurs dès la fin du septième octet suivant la fin du champ (INFO) (ce qui correspond à la fin d'émission du champ vide (CV)), la sortie (606) du compteur passe au niveau 1 ce qui positionne la sortie (620) de la bascule (62) au niveau 1. Cette sortie (620) représente le signal (INI) qui va remettre à 0 le compteur (60). Cette bascule (62) est remise à 0 par un signal début de trame émis (DTE). Un signal (EMISSION), indiquant lorsqu'il est à zéro que la station n'est pas en émission, reçu sur l'entrée de mise à 1 de la bascule (62) force la sortie (620) à 1 lorsque la station n'est pas émettrice, ce qui empêche le fonctionnement des circuits (60) et (61) d'émission. La sortie (q) de la bascule (63) reste à 1 lorsque la station n'est pas émettrice (car (INI) = 1); le compteur (60) est alors chargé cycliquement à 0 tous les huit coups d'horloge. Lorsque la station commence à émettre, le signal (INI) passe à 0, mais la sortie (q) de la bascule (63) reste à 1 jusqu'à ce que le signal (DERNIER OCTET) passe à 1; la sortie (q) passe alors à 0, ce qui empêche le chargement cyclique à 0 du compteur (60), et permet d'émettre les champs (FCS) (FT et le champ vide (CV). Lorsque l'émission est terminée (champ vide émis), le signal (INI) passe à 1, et la sortie (q) de la bascule (63) repasse à 1.

Lorsque le logiciel de la station d'émission a pris en compte les valeurs des signaux (ETAT, ETAT OK) et (E) il passe à la phase de confirmation implicite par envoi d'une autre trame ou d'un jeton si les valeurs des signaux (ETAT OK), (E) n'indiquent pas d'erreur dans le champ vide ou dans la transmission.

Dans le cas où (ETAT OK) signale un défaut dans l'échange des messages et/ou (E) signale une erreur dans la transmssion, la station émet une trame d'annulation.

Si la station émettrice (EM) tombe en panne sans avoir ni annulé, ni confirmé, une procédure d'enquête est menée par une autre station pour savoir s'il y a lieu d'annuler ou de confirmer le message.

La distinction entre la signification du bit (c) et du bit (D) apparaît donc nettement à la lumière de ce qui a été décrit, puisque le bit (C) signifie que la trame a été copiée correctement et complètement dans le tampon de réception (203). Une rafale de trame étant susceptible d'entrer dans la station en provenance d'une ou de plusieurs autres stations différentes, le tampon (203) peut saturer par suite de sa taille limitée. C'est ce qu'on appelle erreur de cadence en réception. Le bit (C) ne reflète donc dans ce cas qu'une impossibilité physique momentanée par une station de recevoir une trame et ce indépendamment de l'identité et de l'état du ou des processus locaux destinataires. Par contre le bit (D) exprime une place mémoire suffisante associée à l'adresse logique déterminée du message. Dans le cas où le bit (D) indique une saturation de la pldce mémoire (boîte aux lettres) associée à une adresse logique (DA) déterminée, il est nécessaire d'interrompre momentanément les émissions de messages vers l'adresse logique de cette boîte aux lettres. Ceci n'empêche pas la station qui a positionné le bit (D) d'être capable de recevoir immédiatement après, une multitude de messages pour d'autres adresses logiques.

Il est bien évident que des modifications à la portée de l'homme de métier font également partie de l'esprit de l'invention.

**Revendications**

1. Procédé de diffusion sûre de messages dans un réseau en anneau entre une station émettrice et plusieurs stations du réseau auxquelles un message contenu dans le champ d'information (INFO) d'une trame est susceptible d'être adressé par un champ d'adresse destinataire (DA) et copié, comportant une étape d'émission par la station émettrice (EM) après un champ (FT) indiquant la fin de la trame d'un champ vide (CV) contenant au départ aucune information et caractérisé en ce qu'il comporte en outre une étape de modification de l'information contenue dans un bit (D) de ce champ vide (CV) au passage dans chaque station, pour indiquer que les stations qui se sont reconnues comme adressées par le champ d'adresse destinataire (DA) et ont copié l'information avaient bien la place suffisante en mémoire associée à l'adresse destinataire (DA) pour copier le message dans son intégralité, par comparaison entre une valeur (L) indiquant la longueur du message transmis valeur (L) fournie par les premiers bits du champ d'information (INFO) et une valeur (C de F) rangée dans une mémoire de la station, indicatrice du crédit mémoire de la station disponible pour cette adresse destinataire (DA).

2. Procédé selon la revendication 1, caractérisé en ce que dans l'étape de modification du champ vide (CV) le bit (D) est maintenu à la valeur binaire 0 lorsque aucune station en amont n'a été adressée ou qu'une station adressée n'avait pas la possibilité de prendre en compte intégralement le message et le bit (D) est modifié ou maintenu à la valeur binaire 1 lorsque toutes les stations qui étaient adressées en amont avaient la possibilité de memoriser intégralement le message.

3. Procédé selon la revendication 1 ou 2 caractérisé en ce que l'étape de modification de l'information du champ vide (CV) comporte l'étape d'incrémentation d'un certain nombre de bits constituant un champ de compteur (CPT) dont la capacité est en relation avec le nombre de stations du réseau et une étape de modification ou de recopie d'au moins un bit (A) indiquant que la station s'est reconnue comme adressée.

4. Procédé selon la revendication 3, caractérisé en ce que l'étape de modification comporte suivant le cas une étape de modification d'au moins un bit (C) indiquant que toutes les stations adressées ont bien recopié la trame courante ou qu'au moins une station adressée n'a pas recopié cette trame.

5. Procédé selon l'une des revendications 1 à 4, caractérisé en ce que les bits (A), (C) et (D), sont au nombre de deux et que les étapes de modification de ces bits sont doublées pour permettre une amélioration de la sécurité.

6. Procédé selon une des revendications 4 ou 5 caractérisé en ce qu'il comporte en outre une étape de lecture de l'information modifiée du champ (CV) au retour à la station émettrice (EM) pour s'assurer que le message a été vu par toutes les stations et retenu par les stations concernées.

7. Procédé selon la revendication 6 caractérisé en ce qu'il comporte en outre une étape d'émission par la station émettrice d'une trame d'annulation de la trame précédente lorsque l'étape de lecture par la station émettrice de l'information du champ (CV) modifié indique une anomalie ou l'étape de lecture d'un bit (E) du champ (FT) indique une erreur dans la trame transmise.

8. Dispositif de mise en oeuvre du procédé selon l'une des revendications précédentes caractérisé en ce qu'il comporte dans chaque station des moyens (6) d'émission d'un champ vide (CV), des moyens (7) de réception et de stockage de l'information contenue dans un champ vide et des moyens de détection du passage du champ vide, des moyens (20) de reconnaissance de l'adressage ou du non adressage de la station et de prise en compte de l'information (INFO), des moyens d'extraction de la longueur du message à prendre en compte, (exprimée par exemple en octets), du champ d'information (premier octet du champ (INFO); des moyens (8) de modification de l'information véhiculée par le champ vide (CV) en fonction du résultat fourni par les moyens de reconnaissance d'adressage (20) et les moyens de comparaison de la longueur de l'information à prendre en compte et de la place disponible dans la mémoire (213) des moyens (20) de prise en compte de l'information.

9. Dispositif selon la revendication 8, caractérisé en ce qu'il comporte des moyens (5) de lecture de l'information contenue dans le champ vide (CV) permettant de comparer le nombre de stations du réseau enregistrées dans une mémoire (50) avec le nombre de stations traversées par le mes sage et d'indiquer à l'organe de traitement (20) de la station que le message a été pris en compte par toutes les stations qui se sont reconnues, des moyens d'indiquer que toute l'information transmise a été prise en compte par toutes les stations qui se sont reconnues.

10. Dispositif selon la revendication 9, caractérisé en ce qu'il comporte des moyens de mémorisation du crédit mémoire disponible dans la station traversée pour l'adresse destinataire (DA) indiquée et des moyens de sélection du champ indiquant la longueur (L) de l'information, contenue dans le champ d'information (INFO), (premier octet de ce champ).

**Patentansprüche**

1. Verfahren zur sicheren Nachrichtenverbreitung in einem Ringnetz zwischen einer Sendestation und mehreren Netzstationen, zu welchen eine in dem Informationsfeld (INFO) eines Rasters enthaltene Nachricht durch ein Empfänger-Adressierfeld (DA) adressiert sowie kopiert werden soll, mit einer Sendephase, in der die Sendestation (EM) nach einem Feld (FT) das das Ende des Rasters anzeigt, ein Leerfeld (CV) sendet, welches anfangs keine Information enthält, und dadurch gekennzeichnet, daß es ferner eine Phase enthält, in der beim Durchgang durch jede Station die Information in einem Bit (D) dieses Leerfeldes (CV) verändert wird, um anzuzeigen, daß die Stationen, die sich durch das Empfänger-Adressierfeld (DA) als adressiert erkannt haben und die Information kopiert haben, in dem der Empfänger-Adresse (DA) zugeordneten Speicher ausreichend Platz hatten, um die Nachricht in ihrer Gesamtheit zu kopieren, durch einen Vergleich zwischen einem die Länge der übertragenen Nachricht anzeigenden Wert (L), der von den ersten Bits des Informationsfeldes (INFO) geliefert wird, und einem in einem Speicher der Station enthaltenen Wert (C von F), welcher den Speicherplatz angibt, der für diese Empfänger-Adresse (DA) verfügbar ist.

2. Verfahren nach Anspruch 1, dadurch gekennzeichnet, daß in der Phase zur Veränderung des Leerfeldes (CV) das Bit (D) auf einem Binärwert 0 gehalten wird, wenn keine vorausgehende Station adressiert worden ist oder wenn eine adressierte Station nicht die Möglichkeit hatte, die Nachricht vollständig zu übernehmen, und das Bit (D) verändert oder auf dem Binärwert 1 gehalten wird, wenn alle vorausgehenden adressierten Stationen die Möglichkeit hatten, die Nachricht vollständig zu speichern.

3. Verfahren nach Anspruch 1 oder 2, dadurch gekennzeichnet, daß die Phase zur Veränderung der Information des Leerfeldes (CV) den Schritt zur Inkrementierung einer bestimmten Anzahl von Bits umfaßt, welche ein Zählerfeld (CPT) bilden, dessen Kapazität in Beziehung zu der Anzahl der Netzstationen steht, sowie einen Schritt zur Veränderung oder zum Neukopieren wenigstens eines Bits (A) umfaßt, das anzeigt, daß die Station sich als adressiert erkannt hat.

4. Verfahren nach Anspruch 3 dadurch gekennzeichnet, daß der Schritt zur Veränderung je nach Fall einen Schritt zur Veränderung wenigstens eines Bits (C) umfaßt, das anzeigt, daß alle adressierten Stationen das Raster tatsächlich kopiert haben oder daß wenigstens eine adressierte Station dieses Raster nicht kopiert hat.

5. Verfahren nach einem der Ansprüche 1 bis 4, dadurch gekennzeichnet, daß die Bits (A), (C) und (D) zweifach vorhanden sind und daß die Schritte zur Veränderung dieser Bits verdoppelt werden, um eine Verbesserung der Sicherheit zu ermöglichen.

6. Verfahren nach einem der Ansprüche 4 und 5, dadurch gekennzeichnet, daß es ferner einen Schritt zum Auslesen der veränderten Information des Feldes (CV) auf dem Weg zurück zur Sendestation (EM) umfaßt, um sicherzustellen, daß die Nachricht von allen Stationen gesehen und von den betroffenen Stationen festgehalten worden ist.

7. Verfahren nach Anspruch 6, dadurch gekennzeichnet, daß es ferner einen Schritt zum Senden eines Rasters zum Annulieren des vorausgehenden Rasters durch die Sendestation umfaßt wenn der Schritt des Auslesens der Information des veränderten Feldes (CV) durch die Sendestation eine Unregelmäßigkeit anzeigt oder wenn der Schritt des Auslesens eines Bits (E) des Feldes (FT) einen Fehler in dem übertragenen Raster anzeigt.

8. Vorrichtung für die Durchführung des Verfahrens nach einem der vorstehenden Ansprüche, dadurch gekennzeichnet, daß sie in jeder Station Mittel (6) zur Aussendung eines Leerfeldes (CV), Mittel (7) zum Empfangen und zum Speichern der in einem Leerfeld enthaltenen Information, Mittel zur Erfassung des Durchganges eines Leerfeldes, Mittel (20) zur Erkennung des Adressier- bzw. Nichtadressierzustandes der Station und der Berücksichtigung der Information (INFO), Mittel zum Extrahieren der Länge der zu berücksichtigenden Nachricht (z. B. in Oktaden ausgedrückt) aus dem Informationsfeld (erste Feldoktade (INFO) umfaßt; sowie Mittel (8) zur Veränderung der durch das Leerfeld (CV) übertragenen Information umfaßt, in Abhängigkeit des durch die Mittel (20) zur Erkennung der Adressierung und durch die Mittel zum Vergleichen der Länge der zu berücksichtigenden Information gelieferten Ergebnisses und des verfügbaren Platzes in dem Speicher (213) der Mittel (20) zur Berücksichtigung der Information.

9. Vorrichtung nach Anspruch 8, dadurch gekennzeichnet, daß sie Mittel (5) zum Auslesen der in dem Leerfeld (CV) enthaltenen Information umfaßt, welche es ermöglichen, die Anzahl der in einem Speicher (50) gespeicherten Netzstationen mit der Anzahl der von der Nachricht durchquerten Stationen zu vergleichen und dem Verarbeitungselement (20) der Station anzeigen, daß die Nachricht von allen Stationen berücksichtigt worden ist, die sich erkannt haben, sowie Mittel umfaßt, die anzeigen, daß die ganze übertragene Information von allen Stationen berücksichtigt worden ist, die sich erkannt haben.

10. Vorrichtung nach Anspruch 9, dadurch gekennzeichnet, daß sie Mittel zum Speichern des verfügbaren Speicherplatzes in der durchquerten Station für die angezeigte Empfänger-Adresse (DA) sowie Mittel zur Selektion des Feldes umfaßt, das die Länge (L) der Information anzeigt, welche in dem Informationsfeld (INFO) enthalten ist (erste Oktade dieses Feldes).

## Claims

1. Process for reliable distribution of messages within a ring network between a transmitting station and several network stations to which a message contained in the information field (INFO) of a frame is liable to be sent by means of a destination address field (DA) and to be copied, comprising a stage for transmission by the transmitting station (EM) after a field (FT) indicating the end of the frame of a blank field (CV) containing no data at the start, characterised in that it further comprises a stage for modification of the information contained in a bit (D) of this blank field (CV) upon passing within each station, to indicate that the stations which had detected that they were being addressed by the destination address field (DA) and had copied the information, actually had sufficient memory capacity allocated to the destination address (DA) for copying the whole of the message, by comparison between a value (L) indicating the length of the message transmitted, the value (L) being provided by the first bits of the information field (INFO), and a value (C of F) stored in a memory of the station indicative of the spare memory of the station available for this destination address (DA).

2. Process according to claim 1, characterised in that during the stage for modification of the blank field (CV), the bit (D) is kept at the binary value 0 if no preceding station had been addressed or if an addressed station lacked the means to pick up the whole message, and the bit (D) is modified or kept at the binary value 1 if all the preceding stations which had been addressed had the means for storing the message as a whole.

3. Process according to claim 1 or 2, characterised in that the stage for modification of the information of the blank field (CV) comprises the incrementation stage of a certain number of bits forming a counter field (CPT), the capacity of which is related to the number of stations of the network, and a stage for modification or recopying of at least one bit (A), indicating that the station had detected that it was being addressed.

4. Process according to claim 3, characterised in that the modification stage is provided as required with a stage for modification of at least one bit (C) indicating that all the stations addressed had safely recopied the current frame, or that at least one station addressed had not recopied this frame.

5. Process according to one of the claims 1 to 4, characterised in that the bits (A), (C) and (D) are two in number and that the stages for modification of these bits are doubled to allow an improvement of reliability.

6. Process according to one of claims 4 or 5, characterised in that it further comprises a stage for reading the modified information of the field (CV) upon return to the transmitting station (EM) to censure that the message had been picked up by all the stations and retained by the stations concerned.

7. Process according to claim 6, characterised in that it further comprises a stage for transmission by the transmitting station of a frame for cancelling the preceding frame, if the stage for reading the information of the modified field (CV) by the transmitting station indicates an anomaly, or the stage for reading a bit (E) of the field (FT) indicates an error in the frame transmitted.

8. Device for application of the process according to one of the preceding claims, characterised in that it is provided in each station with means (6) for transmission of a blank field (CV), means (7) for reception and storage of the information contained in a blank field and means for detection of the passage of the blank field, means (20) for recognition of the presence or absence of the address of the station and for consideration of the information (INFO), means for extraction of the length of the message which is to be considered (for example expressed in octets) from the information field (first octet of the field (INFO); means (8) for modification of the information carried by the blank field (CV) as a function of the result provided by the address recognition means (20) and the means for comparison of the length of the information which is to be considered and of the space available in the memory (213) of the means (20) for considering the information.

9. Device according to claim 8, characterised in that it comprises means (5) for reading the information contained in the blank field (CV) permitting a comparison of the number of network stations recorded in a memory (50) with the number of stations traversed by the message and for indicating to the processing unit (20) of the station that the message had been considered by all the stations which had identified themselves and means for indicating that all the information transmitted has been considered by all the stations which had identified themselves.

10. Device according to claim 9, characterised in that it comprises means for storing the spare memory available in the station traversed for the destination address (DA) indicated, and field selection means indicating the length (L) of the information contained in the information field (INFO), (first octet of this field).

0 190 060

# FIG.1

# FIG.2

FIG. 3

0 190 060

FIG.4

21

T1 →

T1+a → | e |

T2+e →

T2+e+b → | Ǝ | IR | VER | .c de F |

0 190 060

FIG. 5

0 190 060

FIG. 6

0 190 060

FIG. 7

0 190 060

FIG. 8